# EUROPEAN PATENT APPLICATION

(11) **EP 4 611 459 A1**
(43) Date of publication of application: **03.09.2025**
(21) Application number: 23881968.4
(22) Date of filing: 27.10.2023
(51) Int. Cl.: H04W 72/12

(54) **METHOD AND APPARATUS USED IN NODE FOR WIRELESS COMMUNICATION**

(30) Priority: 28.10.2022 CN 202211331628
(71) Applicant: Apogee Networks, LLC, Dallas, TX 75201 (US)
(72) Inventor: WU, Lu, Shanghai 201206 (CN); ZHANG, Xiaobo, Shanghai 201206 (CN)
(74) Representative: Gunzelmann, Rainer
(86) International application number: PCT/CN2023/127194
(87) International publication number: WO 2024/088393

(57) **Abstract**

The present application discloses a method and apparatus used in a node for wireless communication. A first node receives a first information block, receives first signaling, and sends a first signal in a first time sub-window group in a first time pool. The first information block is used to determine a reference time domain resource set. The first signaling indicates scheduling information of the first signal, the first signaling is used for determining the first time pool, and the first time pool comprises more than one symbol. A reference symbol group is used for determining the first time sub-window group, and the reference symbol group depends on whether the first time pool and the reference time domain resource set overlap. When the first time pool is orthogonal to the reference time domain resource set, the reference symbol group is a first symbol group. When the first time pool belongs to the reference time domain resource set, the reference symbol group is a second symbol group.

## Description

### SPECIFICATION

### Technical Field

This application relates to a transmission method and apparatus in a wireless communication system, and in particular, to a radio signal transmission method and apparatus in a wireless communication system supporting a cellular network.

### Related Art

In an existing new radio (NR) system, spectrum resources are statically divided into a frequency division duplexing (FDD) spectrum and a time division duplexing (UDP) spectrum. Moreover, for the UDP spectrum, both a base station and a user equipment operate in half-duplex mode. Such a half-duplex mode avoids self-interference and can alleviate impact of cross-link interference, which, however, causes a decrease in resource utilization and an increase in latency. In response to the problems, supporting a flexible duplex mode on the UDP spectrum or the FDD spectrum becomes a possible solution. Research on duplex technologies is agreed at the 3GPP radio access network (RAN) 1 #103e meeting, where a subband non-overlapping full duplex is provided, that is, a base station device is supported to simultaneously perform transmission and reception on two subbands. Communication in this mode may be subjected to severe interference, including self-interference and cross-link interference.

### SUMMARY

The inventor finds through research that, in physical resources assigned to a transmission, how to determine a physical resource actually occupied by the transmission is a key problem.

With respect to the foregoing problem, this application discloses a solution. It should be noted that in the description of this application, a flexible duplex mode is only used as a typical application scenario or example. This application can also be applied to an application scenario in half-duplex mode. Further, using a unified design scheme for different scenarios (including, but not limited to, SBFD, another flexible duplex mode or a full-duplex mode, a variable link direction mode, a conventional duplex mode, a half-duplex mode, and the like) further helps reduce hardware complexity and costs. In the absence of conflict, an embodiment of any node in this application and a feature in the embodiment may be applied to any other node. In the absence of conflict, embodiments of this application and features in the embodiments may be combined with each other arbitrarily.

In an embodiment, the terminology in this application is interpreted with reference to the definitions in the 3GPP TS36 series.

In an embodiment, the terminology in this application is interpreted with reference to the definitions in the 3GPP TS38 series.

In an embodiment, the terminology in this application is interpreted with reference to the definitions in the 3GPP TS37 series.

In an embodiment, the terminology in this application is interpreted with reference to the definitions in specification protocols of the Institute of Electrical and Electronics Engineers (IEEE).

This application discloses a method in a first node for wireless communication, including:
receiving a first information block, and receiving first signaling; and
sending a first signal in only a first time sub-window group in a first time pool, where
the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, problems to be resolved in this application include how to determine a physical resource actually occupied by a transmission.

According to an aspect of this application, the reference symbol group includes the first symbol group and the second symbol group when the first time pool and the reference time domain resource set overlap and the first time pool includes a time domain resource that does not belong to the reference time domain resource set.

According to an aspect of this application, the reference symbol group is used for determining a target symbol group in the first time pool, and the first time sub-window group includes some or all symbols outside the target symbol group in the first time pool.

According to an aspect of this application, the first time sub-window group includes M time sub-windows, where M is a positive integer greater than 1; and the first signal includes M sub-signals, the M time sub-windows respectively include time domain resources occupied by the M sub-signals, and the M sub-signals respectively include M actual repetitions of a first bit block.

According to an aspect of this application, the first time pool includes N time windows, where N is a positive integer greater than 1; and any time sub-window in the first time sub-window group belongs to one of the N time windows.

According to an aspect of this application, at least one symbol in the reference time domain resource set is configured by a higher layer parameter as a DL symbol.

According to an aspect of this application, the first signal is transmitted on a PUSCH, where a type of a PUSCH scheduled by the first signaling is used for determining whether the first time sub-window group meets one of a first condition and a second condition, or meets one of the first condition, the second condition, and a third condition; and the first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

According to an aspect of this application, the first receiver is included, and configured to receive a second information block, where
the second information block is used to indicate the first symbol group.

According to an aspect of this application, the first receiver is included, and configured to receive a third information block, where
the third information block is used to indicate the second symbol group.

This application discloses a method in a second node for wireless communication, including:
sending a first information block, and sending first signaling; and
receiving a first signal in only a first time sub-window group in a first time pool, where
the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

According to an aspect of this application, the reference symbol group includes the first symbol group and the second symbol group when the first time pool and the reference time domain resource set overlap and the first time pool includes a time domain resource that does not belong to the reference time domain resource set.

According to an aspect of this application, the reference symbol group is used for determining a target symbol group in the first time pool, and the first time sub-window group includes some or all symbols outside the target symbol group in the first time pool.

According to an aspect of this application, the first time sub-window group includes M time sub-windows, where M is a positive integer greater than 1; and the first signal includes M sub-signals, the M time sub-windows respectively include time domain resources occupied by the M sub-signals, and the M sub-signals respectively include M actual repetitions of a first bit block.

According to an aspect of this application, the first time pool includes N time windows, where N is a positive integer greater than 1; and any time sub-window in the first time sub-window group belongs to one of the N time windows.

According to an aspect of this application, at least one symbol in the reference time domain resource set is configured by a higher layer parameter as a DL symbol.

According to an aspect of this application, the first signal is transmitted on a PUSCH, where a type of a PUSCH scheduled by the first signaling is used for determining whether the first time sub-window group meets one of a first condition and a second condition, or meets one of the first condition, the second condition, and a third condition; and the first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

According to an aspect of this application, sending a second information block is included, where
the second information block is used to indicate the first symbol group.

According to an aspect of this application, sending a third information block is included, where
the third information block is used to indicate the second symbol group.

This application discloses a first node device for wireless communication, including:
a first receiver, configured to receive a first information block, and receive first signaling; and
a first transmitter, configured to send a first signal in only a first time sub-window group in a first time pool, where
the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

This application discloses a second node device for wireless communication, including:
a second transmitter, configured to send a first information block, and send first signaling; and
a second receiver, configured to receive a first signal in only a first time sub-window group in a first time pool, where
the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, compared with the conventional solution, this application has the following advantages:
- For transmissions on different time domain resources, physical resources occupied by actual transmissions can be flexibly adjusted.
- Different time domain resources can be applied to different scenarios, for example, different duplex modes, different interference environments, different antennas, and different spatial characteristics.

### BRIEF DESCRIPTION OF THE DRAWINGS

Other features, objectives, and advantages of this application will become more apparent by reading detailed descriptions of non-limiting embodiments with reference to the following accompanying drawings.
FIG. 1 is a flowchart of a first information block, first signaling, and a first signal according to an embodiment of this application;
FIG. 2 is a schematic diagram of a network architecture according to an embodiment of this application;
FIG. 3 is a schematic diagram of an embodiment of a radio protocol architecture of a user plane and a control plane according to an embodiment of this application;
FIG. 4 is a schematic diagram of a first communication device and a second communication device according to an embodiment of this application;
FIG. 5 is a flowchart of a transmission according to an embodiment of this application;
FIG. 6 is a schematic diagram of a reference symbol group according to an embodiment of this application;
FIG. 7A and FIG. 7B respectively show schematic diagrams of a reference symbol group being used for determining a first time sub-window group according to an embodiment of this application;
FIG. 8 is a schematic diagram of a first time sub-window group according to an embodiment of this application;
FIG. 9 is a schematic diagram of a first time sub-window group according to an embodiment of this application;
FIG. 10 is a schematic diagram of relationships between N time windows and a first time sub-window group according to an embodiment of this application;
FIG. 11 is a schematic diagram of a reference time domain resource set according to an embodiment of this application;
FIG. 12 is a schematic diagram of a reference time domain resource set according to another embodiment of this application;
FIG. 13 is a schematic diagram of a reference time domain resource set according to another embodiment of this application;
FIG. 14 is a structural block diagram of a processing apparatus used in a first node device according to an embodiment of this application; and
FIG. 15 is a structural block diagram of a processing apparatus used in a second node device according to an embodiment of this application.

### DETAILED DESCRIPTION

The technical solutions of this application are further described below in detail with reference to the accompanying drawings. It should be noted that in the absence of conflict, embodiments in this application and features in the embodiments may be combined with each other arbitrarily.

### Embodiment 1

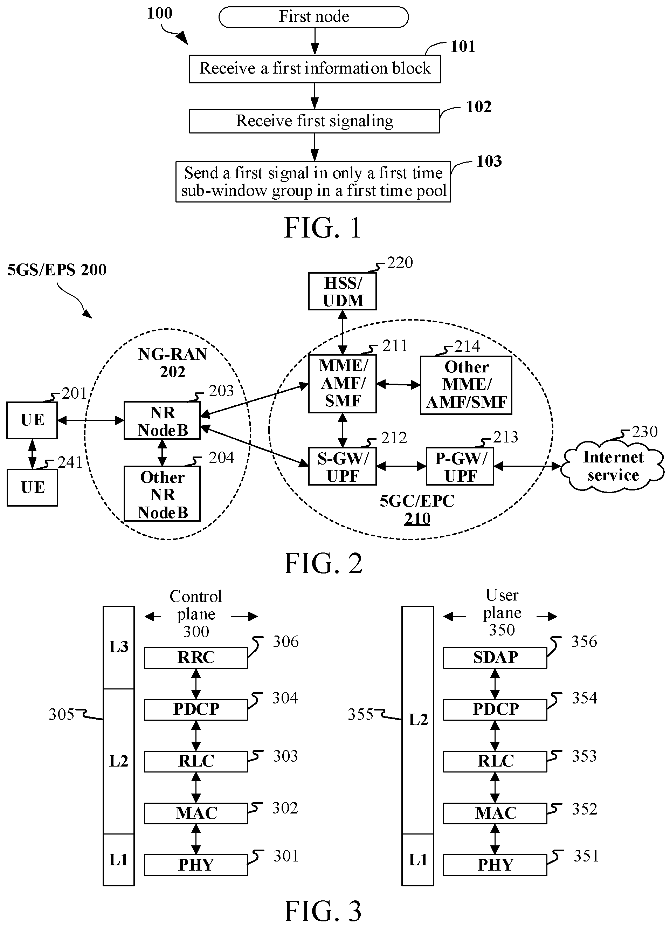

Embodiment 1 illustrates a flowchart of a first information block, first signaling, and a first signal according to an embodiment of this application, as shown in FIG. 1. In 100 shown in FIG. 1, each box represents a step.

In Embodiment 1, a first node in this application receives a first information block in step 101, and receives first signaling in step 102; and sends a first signal in only a first time sub-window group in a first time pool in step 103, where the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the reference time domain resource set is configured for a serving cell in which the first signal is located.

In an embodiment, the reference time domain resource set is configured for a bandwidth part (BWP) in which the first signal is located.

In an embodiment, the BWP in which the first signal is located is an uplink BWP.

In an embodiment, the reference symbol group is for a serving cell in which the first signal is located.

In an embodiment, the reference symbol group is for a BWP in which the first signal is located.

In an embodiment, the reference symbol group is for a UL BWP in which the first signal is located.

In an embodiment, the first symbol group and the second symbol group are both for a serving cell in which the first signal is located.

In an embodiment, the first symbol group and the second symbol group are both for a BWP in which the first signal is located.

In an embodiment, the first symbol group and the second symbol group are both configured for a serving cell in which the first signal is located.

In an embodiment, the first symbol group and the second symbol group are both configured for a BWP in which the first signal is located.

In an embodiment, the first information block is carried by higher layer signaling.

In an embodiment, the first information block is carried by radio resource control (RRC) signaling.

In an embodiment, the first information block includes all or some fields in an RRC information element (IE).

In an embodiment, the first information block includes all or some fields in each RRC IE in a plurality of RRC IEs.

In an embodiment, the first information block includes all or some fields in a TDD-UL-DL-ConfigCommon IE.

In an embodiment, the first information block includes all or some fields in a TDD-UL-DLConfigDedicated IE.

In an embodiment, the first information block includes all or some fields in a ServingCellConfig IE.

In an embodiment, the first information block includes all or some fields in a ServingCellConfigCommonSIB IE.

In an embodiment, the first information block includes information in all or some fields in a ServingCellConfigCommon IE.

In an embodiment, the first information block is carried by at least one RRC IE.

In an embodiment, a name of an IE carrying the first information block includes TDD-UL-DL-Config.

In an embodiment, a name of an IE carrying the first information block includes ServingCellConfig.

In an embodiment, the first information block is carried by a Media Access Control layer control element (MAC CE).

In an embodiment, the first information block includes a MAC CE.

In an embodiment, the first information block is transmitted on a downlink physical layer data channel (that is, a downlink channel that can be configured to carry physical layer data).

In an embodiment, the first information block is transmitted on a PDSCH.

In an embodiment, the first information block is carried by downlink control information (DCI).

In an embodiment, the first information block includes DCI.

In an embodiment, the first information block includes one or more fields in a piece of DCI.

In an embodiment, the first information block is carried by DCI format 2_0.

In an embodiment, the first information block includes DCI format 2_0.

In an embodiment, the first information block is carried by both RRC signaling and a MAC CE.

In an embodiment, the first information block is carried by both higher layer signaling and DCI.

In an embodiment, the first information block is used to indicate a reference time domain resource set.

In an embodiment, the first information block explicitly indicates a reference time domain resource set.

In an embodiment, the first information block implicitly indicates a reference time domain resource set.

In an embodiment, the first information block indicates a periodicity and a time offset of the reference time domain resource set.

In an embodiment, the first information block indicates a time domain resource included in the reference time domain resource set within a periodicity.

In an embodiment, the first information block indicates a symbol included in the reference time domain resource set within a periodicity.

In an embodiment, the first information block indicates a slot included in the reference time domain resource set within a periodicity.

In an embodiment, a sender of the first signaling supports simultaneously receiving and sending a radio signal in the reference time domain resource set.

In an embodiment, a sender of the first signaling simultaneously receives and sends a radio signal in the reference time domain resource set.

In an embodiment, the reference time domain resource set includes a positive integer number of symbols.

In an embodiment, the reference time domain resource set includes one or more symbols.

In an embodiment, the reference time domain resource set includes one symbol.

In an embodiment, the reference time domain resource set includes a plurality of symbols.

In an embodiment, the reference time domain resource set includes at least one slot.

In an embodiment, the reference time domain resource set includes at least one subframe.

In an embodiment, the symbol is a single-carrier symbol.

In an embodiment, the symbol is a multi-carrier symbol.

In an embodiment, the multi-carrier symbol is an orthogonal frequency division multiplexing (OFDM) symbol.

In an embodiment, the symbol is obtained after an output of a transform precoder (transform precoding) is subjected to OFDM symbol generation.

In an embodiment, the multi-carrier symbol is a single carrier-frequency division multiple access (SC-FDMA) symbol.

In an embodiment, the multi-carrier symbol is a discrete Fourier transform spread OFDM (DFT-S-OFDM) symbol.

In an embodiment, the multi-carrier symbol is a filter bank multi-carrier (FBMC) symbol.

In an embodiment, the multi-carrier symbol includes a cyclic prefix (CP).

In an embodiment, the first signal includes a baseband signal.

In an embodiment, the first signal includes a radio signal.

In an embodiment, the first signal includes a radio frequency signal.

In an embodiment, the first signal is transmitted on an uplink physical channel.

In an embodiment, the first signal is transmitted on a physical uplink shared channel (PUSCH).

In an embodiment, the first signal is transmitted on a physical uplink control channel (PUCCH), and the first signal carries uplink control information (UCI).

In an embodiment, the first signal carries a first bit block, and the first bit block includes at least one bit.

In an embodiment, the first signal carries at least one transport block (TB).

In an embodiment, the first signal carries a code block group (CBG).

In an embodiment, the scheduling information of the first signal includes one or more of a time domain resource, a frequency domain resource, an MCS, a demodulation reference signal (DMRS) port (port), a hybrid automatic repeat request (HARQ) process number, a redundancy version (RV), a new data indicator (NDI), a transmission configuration indicator (TCI) state, or a sounding reference signal resource indicator (SRI).

In an embodiment, the first signaling is physical layer signaling.

In an embodiment, the first signaling is downlink control information (DCI) signaling.

In an embodiment, the first signaling is uplink DCI signaling.

In an embodiment, the first signal includes a PUSCH, and the first signaling is DCI signaling scheduling the PUSCH.

In an embodiment, the first signal includes a PUSCH, and the first signaling is used for configuring or scheduling the PUSCH.

In an embodiment, the first signaling is used for scheduling a PUSCH.

In an embodiment, the first signaling is used for configuring or scheduling a configured grant PUSCH.

In an embodiment, the first signaling is used for configuring or scheduling a configured granted PUSCH, and the first signal is one configured grant PUSCH transmission.

In an embodiment, the first signal is a PUSCH of a type A, and the first signaling is used for configuring or scheduling the PUSCH of the type A.

In an embodiment, the first signal is a PUSCH of a type B, and the first signaling is used for configuring or scheduling the PUSCH of the type B.

In an embodiment, the first signal is a PUSCH of TB processing over multiple slots, and the first signaling is used for configuring or scheduling the PUSCH of TB processing over multiple slots.

In an embodiment, the first signal includes a PUSCH repetition type B transmission, and the first signaling is DCI signaling for scheduling the PUSCH repetition type B transmission.

Typically, the PUSCH of the type A occupies a same symbol position in each of multiple slots.

Typically, a group of consecutive symbols are assigned to the PUSCH of the type B.

Typically, one or more nominal repetitions are assigned to the PUSCH of the type B.

Typically, in the PUSCH of TB processing over multiple slots, a TB size (TBS) is determined based on a size of a time-frequency resource in a plurality of slots.

In an embodiment, for specific definitions of the PUSCH type A, the PUSCH type B, and the TB processing over multiple slots, reference is made to Section 6 of 3GPP TS38.214.

In an embodiment, the first time pool includes a time domain resource assigned to the first signal.

In an embodiment, the first time pool includes at least one nominal repetition.

In an embodiment, the first time pool includes a nominal repetition.

In an embodiment, the first time pool includes more than one nominal repetition.

In an embodiment, the first time pool includes one symbol or a plurality of consecutive symbols.

In an embodiment, the first time pool includes some or all symbols in at least one slot.

In an embodiment, the first time sub-window group belongs to the first time pool.

In an embodiment, the first time sub-window group includes only one time sub-window.

In an embodiment, the first time sub-window group includes at least one time sub-window.

In an embodiment, the first time sub-window group includes only one time sub-window, and the first signal includes one actual repetition of a first bit block.

In an embodiment, one time window includes one nominal repetition.

In an embodiment, one time window includes one symbol or a plurality of consecutive symbols.

In an embodiment, one time window includes a plurality of consecutive symbols.

In an embodiment, a time sub-window includes an actual repetition.

In an embodiment, one time sub-window includes a plurality of consecutive symbols.

In an embodiment, one time sub-window includes one symbol or a plurality of consecutive symbols.

In an embodiment, one time sub-window is within one slot.

In an embodiment, one time window includes at least one time sub-window, one time window includes a period of continuous time, and one time sub-window includes a period of continuous time.

In an embodiment, one time window includes at least one time sub-window, and duration of one time sub-window is not greater than duration of a time window to which the one time sub-window belongs.

In an embodiment, one time window includes at least one time sub-window, and a quantity of symbols included in one time sub-window is not greater than a quantity of symbols included in a time window to which the one time sub-window belongs.

In an embodiment, the first signaling is used to indicate a first time pool.

In an embodiment, the first signaling explicitly indicates the first time pool.

In an embodiment, the first signaling implicitly indicates the first time pool.

In an embodiment, the first signaling indicates a start moment of the first time pool.

In an embodiment, the first signaling is used to indicate periodically occurring time pools, and the first time pool is one of the periodically occurring time pools indicated by the first signaling.

In an embodiment, the first signaling indicates a start moment of the first time pool and total duration of the first time pool.

In an embodiment, the first time pool includes at least one symbol, and the first signaling indicates a start symbol of the first time pool.

In an embodiment, the first time pool includes at least one symbol, and the first signaling indicates a start symbol of the first time pool and a quantity of symbols included in the first time pool.

In an embodiment, the first signaling is used to indicate periodically occurring time pools, and the first time pool is one of the periodically occurring time pools indicated by the first signaling. The first signaling indicates a start symbol of and a quantity of symbols included in an initial time pool in the periodically occurring time pools.

In an embodiment, the first time pool includes at least one symbol, the first signaling includes a first field, and the first field in the first signaling indicates a start symbol of the first time pool and a quantity of symbols included in the first time pool. The first field includes at least one bit.

In an embodiment, the total duration of the first time pool is indicated by the first signaling.

In an embodiment, the total duration of the first time pool is configured by a higher layer parameter.

In an embodiment, the first signaling includes a first field, the first field in the first signaling indicates a first time window, and the first time window is a time window in the first time pool. The first field includes at least one bit.

In a sub-embodiment of the foregoing embodiment, the first field in the first signaling indicates a first time window and a quantity of time windows included in the first time pool.

In a sub-embodiment of the foregoing embodiment, the first field in the first signaling indicates a start symbol of the first time window, a total quantity of symbols included in the first time window, and a quantity of time windows included in the first time pool.

In a sub-embodiment of the foregoing embodiment, the first time window is an earliest time window in the first time pool.

In a sub-embodiment of the foregoing embodiment, the first time pool includes only one time window, and the first time window is the first time pool.

In a sub-embodiment of the foregoing embodiment, the first time pool includes N time windows, where N is a positive integer greater than 1. The first time window is an earliest time window in the N time windows.

In a sub-embodiment of the foregoing embodiment, the first time pool includes N time windows, where N is a positive integer greater than 1. The first time window is used for determining N-1 time windows other than the first time window in the N time windows.

In a sub-embodiment of the foregoing embodiment, the first time pool includes N time windows, where N is a positive integer greater than 1. All time windows other than the first time window in the N time windows are formed by N-1 time windows that are later than the first time window and that are consecutive.

In a sub-embodiment of the foregoing embodiment, the first time pool includes N time windows, where N is a positive integer greater than 1. All time windows other than the first time window in the N time windows are formed by N-1 time windows that are later than the first time window and that are spaced apart from each other by a first threshold, where the first threshold includes at least one symbol.

In a sub-embodiment of the foregoing embodiment, the first field in the first signaling indicates a start symbol of the first time window and a total quantity of symbols included in the first time window.

In a sub-embodiment of the foregoing embodiment, the first time pool includes N time windows, where N is a positive integer. The first field in the first signaling indicates a start symbol of the first time window, a total quantity of symbols included in the first time window, and N.

In a sub-embodiment of the foregoing embodiment, the first time pool includes N time windows, where N is a positive integer. The first field in the first signaling indicates a start symbol of the first time window and a total quantity of symbols included in the first time window. N is configured by a higher layer parameter.

In a sub-embodiment of the foregoing embodiment, the first field in the first signaling indicates a start moment of the first time window and duration of the first time window.

In a sub-embodiment of the foregoing embodiment, the first field in the first signaling indicates a start moment of the first time window, duration of the first time window, and a quantity of time windows included in the first time pool.

In a sub-embodiment of the foregoing embodiment, the first time pool includes N time windows, where N is a positive integer. The first field in the first signaling indicates a start moment of the first time window and duration of the first time window and N.

In an embodiment, the first field includes more than one bit.

In an embodiment, the first field includes only one bit.

In an embodiment, a quantity of bits included in the first field is configured by a higher layer parameter.

In an embodiment, the first field is a Time domain resource assignment field.

In an embodiment, for a specific definition of the Time domain resource assignment field, reference is made to Section 7.3.1 of 3GPP TS38.212.

In an embodiment, the higher layer signaling includes RRC signaling.

In an embodiment, the higher layer signaling includes MAC CE signaling.

In an embodiment, the higher layer parameter is an RRC parameter.

In an embodiment, the higher layer parameter is a MAC CE parameter.

In an embodiment, the first time sub-window group meets one of the following conditions:
- the first time sub-window group belongs to the reference time domain resource set; and
- the first time sub-window group is orthogonal to the reference time domain resource set.

In an embodiment, the first time sub-window group belongs to the reference time domain resource set, or the first time sub-window group is orthogonal to the reference time domain resource set.

In an embodiment, whether the start symbol of the first time pool belongs to the reference time domain resource set is used for determining whether the first time sub-window group belongs to the reference time domain resource set or is orthogonal to the reference time domain resource set. The first time sub-window group is orthogonal to the reference time domain resource set when the start symbol of the first time pool does not belong to the reference time domain resource set. The first time sub-window group belongs to the reference time domain resource set when the start symbol of the first time pool belongs to the reference time domain resource set.

In an embodiment, the first time sub-window group is orthogonal to the reference time domain resource set when the first time pool and the reference time domain resource set overlap and the first time pool includes a time domain resource that does not belong to the reference time domain resource set.

In an embodiment, the first signal carries a first bit block. A time domain resource that is in the first time pool and that belongs to the reference time domain resource set is abandoned for transmission of the first bit block when the first time pool and the reference time domain resource set overlap and the first time pool includes a time domain resource that does not belong to the reference time domain resource set.

In an embodiment, a time domain resource that is in the first time pool and that belongs to the reference time domain resource set is abandoned for transmission of the PUSCH scheduled by the first signaling when the first time pool and the reference time domain resource set overlap and the first time pool includes a time domain resource that does not belong to the reference time domain resource set.

In an embodiment, the first time sub-window group belongs to the reference time domain resource set, or the first time sub-window group is orthogonal to the reference time domain resource set when the first time pool and the reference time domain resource set overlap and the first time pool includes a time domain resource that does not belong to the reference time domain resource set.

In an embodiment, the first signaling is used for determining whether the first time sub-window group belongs to the reference time domain resource set or is orthogonal to the reference time domain resource set when the first time pool and the reference time domain resource set overlap and the first time pool includes a time domain resource that does not belong to the reference time domain resource set.

In an embodiment, the meaning of the sentence "the first signaling is used for determining whether the first time sub-window group belongs to the reference time domain resource set or is orthogonal to the reference time domain resource set" includes: a DCI format of the first signaling is used for determining whether the first time sub-window group belongs to the reference time domain resource set or is orthogonal to the reference time domain resource set. The first time sub-window group belongs to the reference time domain resource set when the DCI format of the first signaling belongs to a first DCI format set. The first time sub-window group is orthogonal to the reference time domain resource set when the DCI format of the first signaling belongs to a second DCI format set. The first DCI format set includes at least one DCI format, the second DCI format set includes at least one DCI format, and the first DCI format set and the second DCI format set are different.

In an embodiment, the meaning of the sentence "the first signaling is used for determining whether the first time sub-window group belongs to the reference time domain resource set or is orthogonal to the reference time domain resource set" includes: a QCL parameter of the PUSCH scheduled by the first signaling is used for determining whether the first time sub-window group belongs to the reference time domain resource set or is orthogonal to the reference time domain resource set. The first time sub-window group belongs to the reference time domain resource set when the QCL parameter of the PUSCH scheduled by the first signaling belongs to a first QCL parameter set. The first time sub-window group is orthogonal to the reference time domain resource set when the QCL parameter of the PUSCH scheduled by the first signaling belongs to a second QCL parameter set. The first QCL parameter set includes at least one QCL parameter, the second QCL parameter set includes at least one QCL parameter, and the first QCL parameter set and the second QCL parameter set are different.

In an embodiment, the meaning of the sentence "the first signaling is used for determining whether the first time sub-window group belongs to the reference time domain resource set or is orthogonal to the reference time domain resource set" includes: a TCI state corresponding to the PUSCH scheduled by the first signaling is used for determining whether the first time sub-window group belongs to the reference time domain resource set or is orthogonal to the reference time domain resource set. The first time sub-window group belongs to the reference time domain resource set when the TCI state corresponding to the PUSCH scheduled by the first signaling belongs to a first TCI state set. The first time sub-window group is orthogonal to the reference time domain resource set when the TCI state corresponding to the PUSCH scheduled by the first signaling belongs to a second TCI state set. The first TCI state set includes at least one TCI state, the second TCI state set includes at least one TCI state, and the first TCI state set and the second TCI state set are different.

In an embodiment, the meaning of the sentence "the first signaling is used for determining whether the first time sub-window group belongs to the reference time domain resource set or is orthogonal to the reference time domain resource set" includes: at least one field in the first signaling indicates whether the first time sub-window group belongs to the reference time domain resource set or is orthogonal to the reference time domain resource set.

In an embodiment, the meaning of the sentence "the first signaling is used for determining whether the first time sub-window group belongs to the reference time domain resource set or is orthogonal to the reference time domain resource set" includes: a type of the PUSCH scheduled by the first signaling is used for determining whether the first time sub-window group belongs to the reference time domain resource set or is orthogonal to the reference time domain resource set. The first time sub-window group belongs to the reference time domain resource set when the type of the PUSCH scheduled by the first signaling belongs to a first PUSCH type set. The first time sub-window group is orthogonal to the reference time domain resource set when the type of the PUSCH scheduled by the first signaling belongs to a second PUSCH type set. The first PUSCH type set includes at least one PUSCH type, the second PUSCH type set includes at least one PUSCH type, and the first PUSCH type set and the second PUSCH type set are different.

In an embodiment, the type of the PUSCH includes at least one of a PUSCH type A, a PUSCH type B, and TB processing over multiple slots.

In an embodiment, the type of the PUSCH includes a type A PUSCH and a type B PUSCH.

In an embodiment, the first time sub-window group meets one of the following conditions:
- the first time sub-window group belongs to the reference time domain resource set;
- the first time sub-window group is orthogonal to the reference time domain resource set; and
- the first time sub-window group and the reference time domain resource set partially overlap, and the first time pool includes a time domain resource that does not belong to the reference time domain resource set.

In an embodiment, the first time sub-window group belongs to the reference time domain resource set, or the first time sub-window group is orthogonal to the reference time domain resource set, or the first time sub-window group and the reference time domain resource set partially overlap and the first time pool includes a time domain resource that does not belong to the reference time domain resource set.

In an embodiment, the first signaling includes a second field, and the second field in the first signaling indicates that the reference symbol group is used for determining the first time sub-window group.

In a sub-embodiment of the foregoing embodiment, the second field includes one bit.

In a sub-embodiment of the foregoing embodiment, a name of the second field includes Invalid symbol pattern indicator.

In a sub-embodiment of the foregoing embodiment, the second field includes one bit, and a value of the second field in the first signaling is 1.

In a sub-embodiment of the foregoing embodiment, the second field includes one bit, the value of the second field being 0 indicates that an invalid symbol pattern is not applied, and the value of the second field being 1 indicates that the invalid symbol pattern is applied.

In a sub-embodiment of the foregoing embodiment, the second field is an invalid symbol pattern indicator.

In a sub-embodiment of the foregoing embodiment, a name of the second field includes Invalid symbol pattern.

In a sub-embodiment of the foregoing embodiment, the second field includes two bits, and the two bits included in the second field respectively correspond to a time domain resource in the reference time domain resource set and a time domain resource outside the reference time domain resource set.

In a sub-embodiment of the foregoing embodiment, the second field includes two bits, and the two bits included in the second field respectively indicate whether the invalid symbol pattern is applied to the reference time domain resource set and whether the invalid symbol pattern is applied to a time domain resource outside the reference time domain resource set.

In a sub-embodiment of the foregoing embodiment, the second field includes two bits, and the two bits included in the second field respectively correspond to a time domain resource that is in the first time pool and that belongs to the reference time domain resource set and a time domain resource that is in the first time pool and that is outside the reference time domain resource set.

In a sub-embodiment of the foregoing embodiment, the second field includes two bits, and the two bits included in the second field in the first signaling respectively indicate that the invalid symbol pattern is applied to a time domain resource that is in the first time pool and that belongs to the reference time domain resource set and that the invalid symbol pattern is applied to a time domain resource that is in the first time pool and that is outside the reference time domain resource set.

In a sub-embodiment of the foregoing embodiment, the second field includes one bit, and the second field corresponds to a time domain resource that is in the first time pool and that is outside the reference time domain resource set.

In a sub-embodiment of the foregoing embodiment, the second field includes one bit, and the second field in the first signaling indicates that the invalid symbol pattern is applied to a time domain resource that is in the first time pool and that is outside the reference time domain resource set.

In a sub-embodiment of the foregoing embodiment, the second field includes one bit, and the second field in the first signaling indicates that the invalid symbol pattern is applied to both a time domain resource that is in the first time pool and that is outside the reference time domain resource set and a time domain resource that is in the first time pool and that belongs to the reference time domain resource set.

In a sub-embodiment of the foregoing embodiment, the second field includes one bit, and the second field in the first signaling indicates that the invalid symbol pattern is applied to a time domain resource that is in the first time pool and that is outside the reference time domain resource set. The higher layer parameter is used to configure application of the invalid symbol pattern to a time domain resource that is in the first time pool and that belongs to the reference time domain resource set.

In a sub-embodiment of the foregoing embodiment, the second field includes one bit, and the second field in the first signaling indicates that the invalid symbol pattern is applied to a time domain resource that is in the first time pool and that is outside the reference time domain resource set. It is default that the invalid symbol pattern is applied to a time domain resource that is in the first time pool and that belongs to the reference time domain resource set.

In an embodiment, the invalid symbol pattern applied to a time domain resource that is in the first time pool and that belongs to the reference time domain resource set corresponds to the second symbol group, and the invalid symbol pattern applied to a time domain resource that is in the first time pool and that is outside the reference time domain resource set corresponds to the first symbol group.

In an embodiment, at least the reference symbol group is used for determining the first time sub-window group.

In an embodiment, the reference symbol group is used for determining at least one invalid symbol in the first time pool, and the first time sub-window group includes some or all symbols other than all the invalid symbols in the first time pool.

In an embodiment, the reference symbol group is used for determining the first time sub-window group in the first time pool.

In an embodiment, the reference symbol group is used for determining which symbol or symbols in the first time pool do not belong to the first time sub-window group.

In an embodiment, the reference symbol group is used for determining which symbol or symbols in the first time pool belong to or do not belong to the first time sub-window group.

In an embodiment, a type of at least one symbol in the first time pool is used for determining the first time sub-window group.

In an embodiment, a type of any symbol in the first time pool is used for determining the first time sub-window group.

In an embodiment, the type of the at least one symbol in the first time pool is used for determining at least one invalid symbol in the first time pool, and the first time sub-window group includes some or all symbols other than all the invalid symbols in the first time pool.

In an embodiment, the type of any symbol in the first time pool is used for determining at least one invalid symbol in the first time pool, and the first time sub-window group includes some or all symbols other than all the invalid symbols in the first time pool.

In an embodiment, the reference symbol group includes one or more symbols, the first symbol group includes one or more symbols, and the second symbol group includes one or more symbols.

In an embodiment, the second symbol group includes some symbols in the first symbol group.

In an embodiment, the second symbol group does not include a symbol in the first symbol group.

In an embodiment, the second symbol group is orthogonal to the first symbol group.

In an embodiment, the second symbol group includes some symbols in the first symbol group and at least one symbol outside the first symbol group.

In an embodiment, the first symbol group and the second symbol group are respectively determined.

In an embodiment, the first symbol group and the second symbol group are different.

In an embodiment, the first symbol group and the second symbol group are respectively configured.

In an embodiment, the first symbol group and the second symbol group are respectively configured by higher layer signaling.

In an embodiment, the first symbol group and the second symbol group are respectively configured by a higher layer parameter.

In an embodiment, a name of an RRC parameter configuring the first symbol group includes InvalidSymbolPattern.

In an embodiment, a name of an RRC parameter configuring the second symbol group includes InvalidSymbolPattern.

In an embodiment, the first symbol group and the second symbol group are both configured for a serving cell in which the first signal is located.

In an embodiment, the first symbol group and the second symbol group are both configured for a serving cell in which the first signal is located.

In an embodiment, the first symbol group and the second symbol group are both configured for a BWP in which the first signal is located.

Typically, whether the reference symbol group is the first symbol group or the second symbol group depends on whether the first time pool and the reference time domain resource set overlap.

Typically, which one of J symbol groups is the reference symbol group depends on whether the first time pool and the reference time domain resource set overlap, where the J symbol groups include the first symbol group and the second symbol group, and J is a positive integer greater than 1.

Typically, the meaning of the sentence "the first time pool is orthogonal to the reference time domain resource set" includes: any symbol in the first time pool does not belong to the reference time domain resource set.

Typically, the meaning of the sentence "the first time pool and the reference time domain resource set overlap" includes: the first time pool belongs to the reference time domain resource set.

Typically, the meaning of the sentence "the first time pool and the reference time domain resource set overlap" includes: the first time pool includes a time domain resource that belongs to the reference time domain resource set and a time domain resource outside the reference time domain resource set.

Typically, the meaning of the sentence "the first time pool and the reference time domain resource set overlap" includes: the first time pool and the reference time domain resource set partially or completely overlap.

In an embodiment, a reference time sub-window is a time sub-window in the first time sub-window group, and a target resource block (RB) set is configured to transmit a sub-signal that is in the first signal and that belongs to the reference time sub-window in time domain. The target RB set depends on whether the reference time sub-window is orthogonal to the reference time domain resource set.

In a sub-embodiment of the foregoing embodiment, the target RB set is a first RB set when the reference time sub-window is orthogonal to the reference time domain resource set. The target RB set is a second RB set when the reference time sub-window belongs to the reference time domain resource set.

In a sub-embodiment of the foregoing embodiment, the second RB set belongs to the first RB set.

In a sub-embodiment of the foregoing embodiment, a quantity of RBs included in the second RB set is not greater than a quantity of RBs included in the first RB set.

In a sub-embodiment of the foregoing embodiment, a quantity of RBs included in the second RB set is less than a quantity of RBs included in the first RB set.

In a sub-embodiment of the foregoing embodiment, the second RB set includes some RBs in the first RB set.

In a sub-embodiment of the foregoing embodiment, the second RB set includes some or all RBs in the first RB set.

In a sub-embodiment of the foregoing embodiment, the first signaling indicates a first RB set. The target RB set is the first RB set when the reference time sub-window is orthogonal to the reference time domain resource set. The target RB set includes at least one SB that is in the first RB set and that belongs to a reference RB set when the reference time sub-window belongs to the reference time domain resource set.

In an embodiment, the reference RB set is configured for UL transmission in the reference time domain resource set.

In an embodiment, uplink transmission performed by the sender of the first signaling in a serving cell in which the first signal is located in the reference time domain resource set belongs to the reference RB set in frequency domain.

In an embodiment, in the reference time domain resource set in the serving cell in which the first signal is located, the reference RB set is used by the sender of the first signaling to send a radio signal.

In an embodiment, uplink transmission performed by the sender of the first signaling in a BWP in which the first signal is located in the reference time domain resource set belongs to the reference RB set in frequency domain.

In an embodiment, in the reference time domain resource set in the BWP in which the first signal is located, the reference RB set is used by the sender of the first signaling to send a radio signal.

### Embodiment 2

Embodiment 2 illustrates a schematic diagram of a network architecture according to an embodiment of this application, as shown in FIG. 2.

FIG. 2 illustrates a network architecture 200 of Long-Term Evolution (LTE), Long-Term Evolution Advanced (LTE-A), and future 5G systems. The network architecture 200 of the LTE, LTE-A, and future 5G systems is referred to as an evolved packet system (EPS) 200. A 5G NR or LTE network architecture 200 may be referred to as a 5G System (5GS)/EPS 200 or another suitable term. The 5GS/EPS 200 may include one or more UEs 201, a UE241 performing Sidelink communication with the UE201, a next generation radio access network (NG-RAN) 202, a 5G core network (5GC)/an evolved packet core (EPC) 210, a home subscriber server (HSS)/unified data management (UDM) 220, and an Internet service 230. The 5GS/EPS 200 may be interconnected to another access network, but for simplicity, these entities/interfaces are not shown. As shown in FIG. 2, the 5GS/EPS 200 provides a packet switching service. However, a person skilled in the art will easily understand that various concepts presented throughout this application may be extended to a network that provides a circuit switching service. The NG-RAN 202 includes an NR node B (gNB) 203 and another gNB204. The gNB203 provides termination of user and control plane protocols toward the UE201. The gNB203 may be connected to another gNB204 by using an Xn interface (e.g., backhaul). The gNB203 may alternatively be referred to as a base station, a base transceiver station, a radio base station, a radio transceiver, a transceiver function, a basic service set (BSS), an extended service set (ESS), a transmit-receive point (TRP), or another suitable term. The gNB203 provides the UE201 with an access point to the 5GC/EPC 210. An example of the UE201 includes a cellular phone, a smart phone, a session initiation protocol (SIP) phone, a laptop computer, a personal digital assistant (PDA), a satellite radio, a global positioning system, a multimedia apparatus, a video apparatus, a digital audio player (e.g., an MP3 player), a camera, a game console, an unmanned aerial vehicle, an aircraft, a narrowband physical network device, a machine type communication device, a land vehicle, an automobile, a wearable device, or any other apparatuses having similar functions. A person skilled in the art may alternatively refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or another suitable term. The gNB203 is connected to the 5GC/EPC 210 by an S1/NG interface. The 5GC/EPC 210 includes a Mobility Management Entity (MM)/Authentication Management Field (AMF)/Session Management Function (SMF) 211, another MM/AMF/SMF 214, a Service Gateway (S-GW)/a User Plane Function (UPF) 212, and a Packet Data Network Gateway (P-GW)/UPF 213. The MME/AMF/SMF 211 is a control node that processes signaling between the UE201 and the 5GC/EPC 210. Generally, the MME/AMF/SMF 211 provides bearer and connection management. All user Internet Protocol (IP) packets are transmitted by using the S-GW/UPF 212, and the S-GW/UPF 212 is connected to the P-GW/UPF 213. The P-GW provides UE IP address assignment and other functions. The P-GW/UPF 213 is connected to the Internet service 230. The Internet service 230 includes IP services corresponding to operators, and may specifically include Internet, Intranet, an IP Multimedia Subsystem (IMS), and packet switching services.

In an embodiment, the first node in this application includes the UE201.

In an embodiment, the first node in this application includes the UE241.

In an embodiment, the second node in this application includes the gNB203.

### Embodiment 3

Embodiment 3 illustrates a schematic diagram of an embodiment of a wireless protocol architecture of a user plane and a control plane according to an embodiment of this application, as shown in FIG. 3.

Embodiment 3 illustrates a schematic diagram of an embodiment of a wireless protocol architecture of a user plane and a control plane according to this application, as shown in FIG. 3. FIG. 3 is a schematic diagram of an embodiment of a radio protocol architecture for a user plane 350 and a control plane 300. In FIG. 3, a radio protocol architecture for the control plane 300 between a first communication node device (a UE, a gNB, or an RSU in V2X) and a second communication node device (a gNB, a UE, or an RSU in V2X) or between two UEs is illustrated by using three layers, which are a layer 1, a layer 2 and a layer 3, respectively. The layer 1 (L1 layer) is the lowest layer and implements signal processing functions of various physical layers (PHYs). The L1 layer is referred to as a PHY 301 herein. The layer 2 (L2 layer) 305 is above the PHY 301, and is responsible for a link between the first communication node device and the second communication node device or between two UEs. The L2 layer 305 includes a Media Access Control (MAC) sublayer 302, a Radio Link Control (RLC) sublayer 303, and a Packet Data Convergence Protocol (PDCP) sublayer 304, and these sublayers terminate at the second communication node device. The PDCP sublayer 304 provides multiplexing between different radio bearers and logical channels. The PDCP sublayer 304 further provides security by encrypting a data packet and provides support for handover of a first communication node device between second communication node devices. The RLC sublayer 303 provides segmentation and reassembling of an upper-layer data packet, retransmission of a lost data packet, and reordering of a data packet so as to compensate for disordered receiving caused by a hybrid automatic repeat request (HARQ). The MAC sublayer 302 provides multiplexing between a logical channel and a transport channel. The MAC sublayer 302 is further responsible for allocating various radio resources (e.g., resource blocks) in a cell between first communication node devices. The MAC sublayer 302 is further responsible for a HARQ operation. An RRC sublayer 306 in the layer 3 (L3 layer) in the control plane 300 is responsible for obtaining a radio resource (that is, a radio bearer) and configuring a lower layer by using RRC signaling between the second communication node device and the first communication node device. A radio protocol architecture of the user plane 350 includes a layer 1 (L1 layer) and a layer 2 (L2 layer). In the user plane 350, for a PHY 351, a PDCP sublayer 354 in an L2 layer 355, an RLC sublayer 353 in the L2 layer 355, and a MAC sublayer 352 in the L2 layer 355, a radio protocol architecture for the first communication node device and the second communication node device is substantially the same as that for the corresponding layers and sublayers in the control plane 300. However, the PDCP sublayer 354 further provides header compression for an upper-layer data packet to reduce radio transmission overhead. The L2 layer 355 in the user plane 350 further includes a Service Data Adaptation Protocol (SDAP) sublayer 356. The SDAP sublayer 356 is responsible for mapping between a Quality of Service (QoS) flow and a Data Radio Bearer (DRB), to support diversity of services. Although not shown in the figure, the first communication node device may have several upper layers above the L2 layer 355, including a network layer (e.g., an IP layer) terminated at a P-GW on a network side and an application layer terminated at the other end (such as a remote UE or a server) of the connection.

In an embodiment, the wireless protocol architecture in FIG. 3 is applicable to the first node in this application.

In an embodiment, the wireless protocol architecture in FIG. 3 is applicable to the second node in this application.

In an embodiment, the first signaling is generated in the RRC sublayer 306.

In an embodiment, the first signaling is generated in the MAC sublayer 302 or the MAC sublayer 352.

In an embodiment, the first signaling is generated in the PHY301 or the PHY351.

In an embodiment, the first signal is generated in the PHY301 or the PHY351.

In an embodiment, the first information block is generated in the RRC sublayer 306.

In an embodiment, the second information block is generated in the RRC sublayer 306.

In an embodiment, the third information block is generated in the RRC sublayer 306.

In an embodiment, the first information block is generated in the MAC sublayer 302 or the MAC sublayer 352.

In an embodiment, the second information block is generated in the MAC sublayer 302 or the MAC sublayer 352.

In an embodiment, the third information block is generated in the MAC sublayer 302 or the MAC sublayer 352.

### Embodiment 4

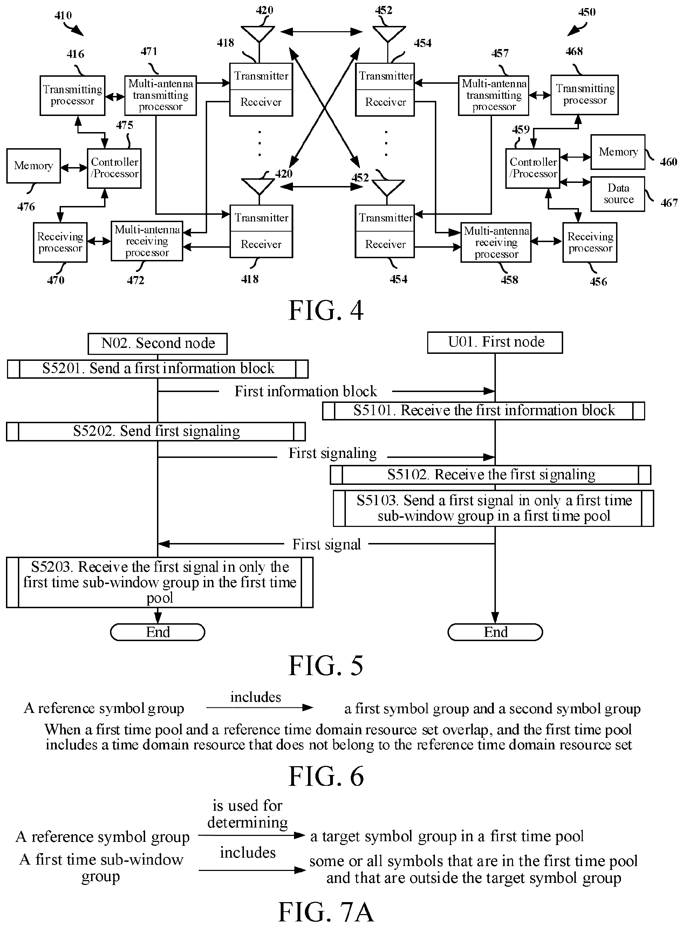

Embodiment 4 illustrates a schematic diagram of a first communication device and a second communication device according to an embodiment of this application, as shown in FIG. 4. FIG. 4 is a block diagram of a first communication device 410 and a second communication device 450 communicating with each other in an access network.

The first communication device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communication device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

During transmission from the first communication device 410 to the second communication device 450, at the first communication device 410, an upper-layer data packet from the core network is provided to the controller/processor 475. The controller/processor 475 implements the functions of the L2 layer. In the downlink (DL), the controller/processor 475 provides header compression, encryption, packet segmentation and reordering, multiplexing between a logical channel and a transport channel, and radio resource allocation of the second communication device 450 based on various priority metrics. The controller/processor 475 is further responsible for a HARQ operation, retransmission of a lost packet, and signaling to the second communication device 450. The transmitting processor 416 and the multi-antenna transmitting processor 471 implement various signal processing functions for the L1 layer (that is, the PHY). The transmitting processor 416 implements coding and interleaving to facilitate forward error correction (FEC) at the second communication device 450 and constellation mapping based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital space precoding, including codebook-based precoding and non-codebook-based precoding, and beamforming processing on encoded and modulated symbols to generate one or more parallel streams. The transmitting processor 416 then maps each parallel stream to a subcarrier, multiplexes a modulated symbol with a reference signal (i.e., pilot frequency) in a time domain and/or a frequency domain, and then uses inverse fast Fourier transform (IFFT) to generate a physical channel carrying a time-domain multi-carrier symbol stream. Subsequently, the multi-antenna transmitting processor 471 performs a transmission analog precoding/beamforming operation on the time-domain multi-carrier symbol stream. Each transmitter 418 converts a baseband multi-carrier symbol stream provided by the multi-antenna transmitting processor 471 into a radio frequency stream, which is later provided to different antennas 420.

During transmission from the first communication device 410 to the second communication device 450, at the second communication device 450, each receiver 454 receives a signal by using a corresponding antenna 452 thereof. Each receiver 454 recovers information modulated onto a radio frequency carrier, and converts the radio frequency stream into a baseband multi-carrier symbol stream which is provided to the receiving processor 456. The receiving processor 456 and the multi-antenna receiving processor 458 implement various signal processing functions of the L1 layer. The multi-antenna receiving processor 458 performs a reception analog precoding/beamforming operation on the baseband multi-carrier symbol stream provided by the receiver 454. The receiving processor 456 converts, by using fast Fourier transform (FFT), the baseband multi-carrier symbol stream, on which the reception analog precoding/beamforming operation is performed, from the time domain to the frequency domain. In the frequency domain, a PHY data signal and a reference signal are demultiplexed by the receiving processor 456, where the reference signal is used for channel estimation, and after multi-antenna detection in the multi-antenna receiving processor 458, the data signal restores any parallel stream using the second communication device 450 as a destination. A symbol in each parallel stream is demodulated and recovered in the receiving processor 456, and a soft decision is generated. Subsequently, the receiving processor 456 decodes and deinterleaves the soft decision to recover the upper-layer data and the control signal that are transmitted by the first communication device 410 on the physical channel. Then, the upper-layer data and the control signal are provided to the controller/processor 459. The controller/processor 459 implements the functions of the L2 layer. The controller/processor 459 may be associated with a memory 460 that stores program code and data. The memory 460 may be referred to as a computer-readable medium. In the DL, the controller/processor 459 provides demultiplexing between a transport channel and a logical channel, packet reassembling, decryption, header decompression, and control signal processing to recover the upper-layer data packet from the core network. The upper-layer packet is later provided to all protocol layers above the L2 layer. Various control signals may alternatively be provided to L3 for processing by L3. The controller/processor 459 is further responsible for performing, by using an acknowledge (ACK) protocol and/or a negative acknowledge (NACK) protocol, error detection, to support the HARQ operation.

During transmission from the second communication device 450 to the first communication device 410, at the second communication device 450, the upper-layer data packet is provided to the controller/processor 459 by using a data source 467. The data source 467 represents all protocol layers above the L2 layer. Similar to a transmitting function at the first communication device 410 described in the DL, the controller/processor 459 implements header compression and encryption, packet segmentation and reordering, and multiplexing between a logical channel and a transport channel based on radio resource allocation of the first communication device 410, and implements an L2 layer function for the user plane and the control plane. The controller/processor 459 is further responsible for a HARQ operation, retransmission of a lost packet, and signaling to the first communication device 410. The transmitting processor 468 performs modulation mapping and channel coding. The multi-antenna transmitting processor 457 performs digital multi-antenna space precoding, including codebook-based precoding and non-codebook-based precoding, and beamforming. Subsequently, the transmitting processor 468 modulates generated parallel streams into a multi-carrier/single-carrier symbol stream which is subjected to an analog precoding/beamforming operation in the multi-antenna transmitting processor 457 and then provided to different antennas 452 by using the transmitter 454. Each transmitter 454 first converts a baseband symbol stream provided by the multi-antenna transmitting processor 457 into a radio frequency symbol stream which is then provided to the antenna 452.

During transmission from the second communication device 450 to the first communication device 410, the function at the first communication device 410 is similar to the receiving function at the second communication device 450 described during transmission from the first communication device 410 to the second communication device 450. Each receiver 418 receives a radio frequency signal by using a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the functions of the L2 layer. The controller/processor 475 may be associated with a memory 476 that stores program code and data. The memory 476 may be referred to as a computer-readable medium. The controller/processor 475 provides demultiplexing between a transport channel and a logical channel, packet reassembling, decryption, header decompression, and control signal processing to recover the upper-layer data packet from the second communication device 450. The upper-layer data packet from the controller/processor 475 may be provided to the core network. The controller/processor 475 is further responsible for performing, by using an ACK protocol and/or a NACK protocol, error detection to support the HARQ operation.

In an embodiment, the second communication device 450 includes at least one processor and at least one memory. The at least one memory includes computer program code. The at least one memory and the computer program code are configured to be used with the at least one processor. An apparatus of the second communication device 450 at least receives a first information block, and receives first signaling; and sends a first signal in only a first time sub-window group in a first time pool, where the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the second communication device 450 includes a memory storing a computer-readable instruction program. The computer-readable instruction program generates actions when being executed by at least one processor. The actions include: receiving a first information block, and receiving first signaling; and sending a first signal in only a first time sub-window group in a first time pool, where the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the first communication device 410 includes at least one processor and at least one memory. The at least one memory includes computer program code. The at least one memory and the computer program code are configured to be used with the at least one processor. The first communication device 410 at least sends a first information block, and sends first signaling; and receives a first signal in only a first time sub-window group in a first time pool, where the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the first communication device 410 includes a memory storing a computer-readable instruction program. The computer-readable instruction program generates actions when being executed by at least one processor. The actions include: sending a first information block, and sending first signaling; and receiving a first signal in only a first time sub-window group in a first time pool, where the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the first node in this application includes the second communication device 450.

In an embodiment, the second node in this application includes the first communication device 410.

In an embodiment, at least one of {the antenna 452, the receiver 454, the receiving processor 456, the multi-antenna receiving processor 458, the controller/processor 459, the memory 460, and the data source 467} is configured to receive the first signaling in this application. At least one of {the antenna 420, the transmitter 418, the transmitting processor 416, the multi-antenna transmitting processor 471, the controller/processor 475, and the memory 476} is configured to send the first signaling in this application.

At least one of {the antenna 452, the receiver 454, the receiving processor 456, the multi-antenna receiving processor 458, the controller/processor 459, the memory 460, and the data source 467} is configured to receive the first information block in this application. At least one of {the antenna 420, the receiver 418, the receiving processor 416, the multi-antenna receiving processor 471, the controller/processor 475, and the memory 476} is configured to send the first information block in this application.

In an embodiment, at least one of {the antenna 452, the receiver 454, the receiving processor 456, the multi-antenna receiving processor 458, the controller/processor 459, the memory 460, and the data source 467} is configured to receive the second information block in this application. At least one of {the antenna 420, the transmitter 418, the transmitting processor 416, the multi-antenna transmitting processor 471, the controller/processor 475, and the memory 476} is configured to send the second information block in this application.

At least one of {the antenna 452, the receiver 454, the receiving processor 456, the multi-antenna receiving processor 458, the controller/processor 459, the memory 460, and the data source 467} is configured to receive the third information block in this application. At least one of {the antenna 420, the receiver 418, the receiving processor 416, the multi-antenna receiving processor 471, the controller/processor 475, and the memory 476} is configured to send the third information block in this application.

In an embodiment, at least one of {the antenna 452, the transmitter 454, the transmitting processor 468, the multi-antenna transmitting processor 457, the controller/processor 459, and the memory 460} is configured to send the first signal in only the first time sub-window group in the first time pool in this application. At least one of {the antenna 420, the receiver 418, the receiving processor 470, the multi-antenna receiving processor 472, the controller/processor 475, and the memory 476} is configured to receive the first signal in only the first time sub-window group in the first time pool in this application.

### Embodiment 5

Embodiment 5 illustrates a flowchart of wireless transmission according to an embodiment of this application, as shown in FIG. 5. In FIG. 5, a first node U01 and a second node N02 are respectively two communication nodes performing transmission through an air interface.

**The first node U01** receives a first information block in step S5101, and receives first signaling in step S5102; and sends a first signal in only a first time sub-window group in a first time pool in step S5103.

**The second node N02** sends a first information block in step S5201, and sends first signaling in step S5202; and receives a first signal in only a first time sub-window group in a first time pool in step S5203.

In Embodiment 5, the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the method in the first node U01 includes:
receiving a second information block, where
the second information block is used to indicate the first symbol group.

In an embodiment, the method in the first node U01 includes:
receiving a third information block, where
the third information block is used to indicate the second symbol group.

In an embodiment, the method in the second node N02 includes:
sending a second information block, where
the second information block is used to indicate the first symbol group.

In an embodiment, the method in the second node N02 includes:
sending a third information block, where
the third information block is used to indicate the second symbol group.

In an embodiment, the first information block and the second information block are both for a serving cell in which the first signal is located.

In an embodiment, the second information block is carried by higher layer signaling.

In an embodiment, the second information block is carried by RRC signaling.

In an embodiment, the second information block includes one or more RRC IEs.

In an embodiment, the second information block includes some or all fields in IE PUSCH-Config.

In an embodiment, a name of the second information block includes InvalidSymbolPattern.

In an embodiment, the second information block indicates a first symbol level bitmap. The first symbol level bitmap includes one or more bits. Any bit in the first symbol level bitmap corresponds to one or more symbols. The first symbol group includes some or all symbols corresponding to all bits whose values are 1 in the first symbol level bitmap.

In an embodiment, the second information block indicates a symbol level bitmap crossing one or two slots, and the first symbol group includes some or all symbols corresponding to all bits whose values are 1 in the symbol level bitmap.

In an embodiment, the second information block indicates a symbol level bitmap crossing one or two slots. A bit value in the symbol level bitmap being equal to 1 indicates that a corresponding symbol is an invalid symbol.

In an embodiment, for a specific definition of the symbol level bitmap, reference is made to to Section 6.1 of 3GPP TS38.214.

In an embodiment, the second information block is further used to indicate the second symbol group.

In an embodiment, the second information block and the third information block are both for a serving cell in which the first signal is located.

In an embodiment, the second information block and the third information block are both for a BWP in which the first signal is located.

In an embodiment, the third information block is carried by higher layer signaling.

In an embodiment, the third information block is carried by RRC signaling.

In an embodiment, the third information block includes one or more RRC IEs.

In an embodiment, the third information block includes some or all fields in IE PUSCH-Config.

In an embodiment, a name of the third information block includes InvalidSymbolPattern.

In an embodiment, the third information block indicates a second symbol level bitmap. The second symbol level bitmap includes one or more bits. Any bit in the second symbol level bitmap corresponds to one or more symbols. The second symbol group includes some or all symbols corresponding to all bits whose values are 1 in the second symbol level bitmap.

In an embodiment, the third information block indicates a symbol level bitmap crossing one or two slots, and the first symbol group includes some or all symbols corresponding to all bits whose values are 1 in the symbol level bitmap.

In an embodiment, the third information block indicates a symbol level bitmap crossing one or two slots. A bit value in the symbol level bitmap being equal to 1 indicates that a corresponding symbol is an invalid symbol.

### Embodiment 6

Embodiment 6 illustrates a reference symbol group according to an embodiment of this application, as shown in FIG. 6.

In Embodiment 6, the reference symbol group includes the first symbol group and the second symbol group when the first time pool and the reference time domain resource set overlap and the first time pool includes a time domain resource that does not belong to the reference time domain resource set.

### Embodiment 7

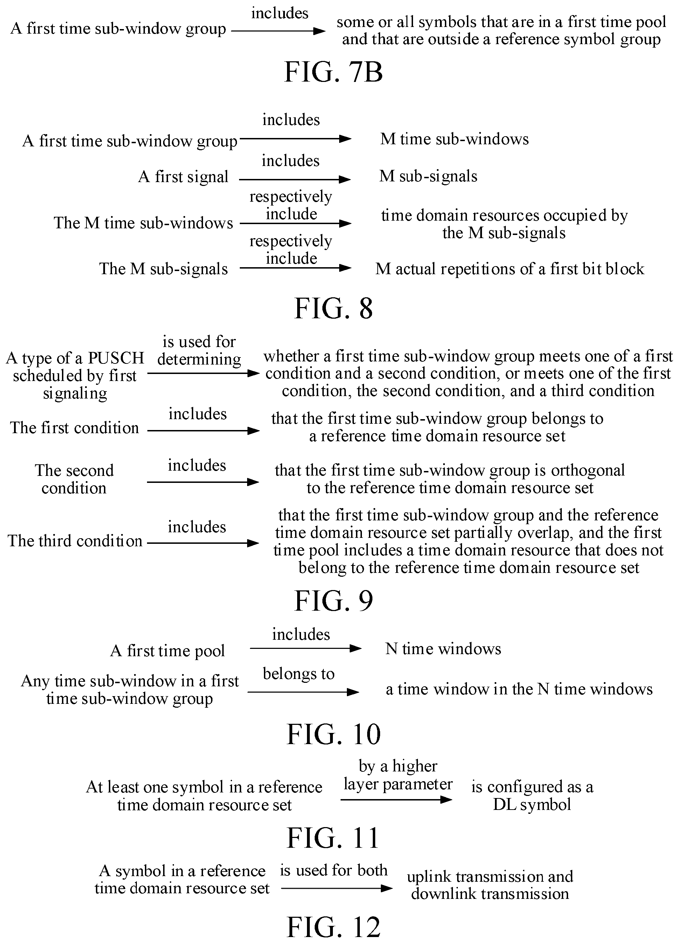

Embodiments 7A and 7B respectively illustrate a reference symbol group being used for determining a first time sub-window group according to an embodiment of this application, as shown in FIG. 7A and FIG. 7B.

In Embodiment 7A, the reference symbol group is used for determining a target symbol group in the first time pool, and the first time sub-window group includes some or all symbols outside the target symbol group in the first time pool.

In an embodiment, the target symbol group is formed by invalid symbols.

In an embodiment, the target symbol group includes at least one invalid symbol.

In an embodiment, at least one symbol in the target symbol group belongs to the reference symbol group.

In an embodiment, the target symbol group includes all symbols that are in the reference symbol group and that belong to the first time pool.

In an embodiment, the target symbol group includes some or all symbols that are in the reference symbol group and that belong to the first time pool.

In an embodiment, the target symbol group includes only some or all symbols that are in the reference symbol group and that belong to the first time pool.

In an embodiment, the target symbol group includes some or all symbols that are in the reference symbol group and that belong to the first time pool, and the target symbol group further includes symbols that are in the first time pool and that do not belong to the reference symbol group.

In an embodiment, the first time sub-window group includes some symbols that are in the first time pool and that are outside the target symbol group.

In an embodiment, the first time sub-window group includes all symbols that are in the first time pool and that are outside the target symbol group.

In an embodiment, a second time sub-window group includes all symbols that are in the first time pool and that are outside the target symbol group, and the second time sub-window group includes at least one time sub-window. The first time sub-window group includes all time sub-windows whose quantities of symbols are not 1 in the second time sub-window group.

In an embodiment, the second time sub-window group includes all symbols that are in the first time pool and that are outside the target symbol group, and the second time sub-window group includes at least one time sub-window. The first time sub-window group includes all time sub-windows whose quantities of symbols do not belong to a first integer set in the second time sub-window group. The first integer set includes one or more positive integers.

In an embodiment, the type of the symbol in the first time pool is further used for determining the target symbol group.

In an embodiment, the type of the symbol in the first time pool is used for determining whether each symbol in the first time pool is an invalid symbol.

In an embodiment, the given symbol is any symbol in the first time pool. The given symbol is an invalid symbol when the given symbol is indicated for receiving a synchronization signal/physical broadcast channel (SS/PBCH) block.

In a sub-embodiment of the foregoing embodiment, the SS/PBCH block belongs to the serving cell in which the first signaling is located.

In a sub-embodiment of the foregoing embodiment, the SS/PBCH block belongs to the serving cell in which the first signal is located.

In a sub-embodiment of the foregoing embodiment, the SS/PBCH block belongs to a cell other than the serving cell in which the first signal is located.

In a sub-embodiment of the foregoing embodiment, the SS/PBCH block belongs to the BWP in which the first signaling is located.

In an embodiment, the given symbol is any symbol in the first time pool. The given symbol is an invalid symbol when the given symbol is indicated for one control resource set (CORESET) in a Type0-PDCCH CSS set.

In an embodiment, the given symbol is any symbol in the first time pool. The given symbol is an invalid symbol when the given symbol is a downlink and uplink switching (DL-UL switching) symbol.

In an embodiment, the given symbol is any symbol in the first time pool. The given symbol is an invalid symbol when the given symbol is used for DL-UL switching.

In an embodiment, the given symbol is any symbol in the first time pool. The given symbol is an invalid symbol when the given symbol is indicated by the higher layer parameter as an invalid symbol.

In an embodiment, the given symbol is any symbol in the first time pool. The given symbol is configured as an invalid symbol when the given symbol is configured by the higher layer parameter as a downlink symbol and the given symbol is a symbol outside the reference time domain resource set.

In an embodiment, the given symbol is any symbol in the first time pool. The given symbol is considered as an invalid symbol when the given symbol is configured as a downlink symbol by tdd-UL-DL-ConfigurationCommon or tdd-UL-DL-ConfigurationDedicated and the given symbol is a symbol outside the reference time domain resource set.

In an embodiment, the meaning of the phrase "invalid symbol" is an invalid symbol transmitted for the first bit block.

In an embodiment, the meaning of the phrase "invalid symbol" is an invalid symbol transmitted for a type B PUSCH repetition.

In Embodiment 7B, the first time sub-window group includes some or all symbols that are in the first time pool and that are outside the reference symbol group.

### Embodiment 8

Embodiment 8 illustrates a first time sub-window group according to an embodiment of this application, as shown in FIG. 8.

In Embodiment 8, the first time sub-window group includes M time sub-windows, where M is a positive integer greater than 1; and the first signal includes M sub-signals, the M time sub-windows respectively include time domain resources occupied by the M sub-signals, and the M sub-signals respectively include M actual repetitions of a first bit block.

In an embodiment, the first bit block includes a positive integer number of bits.

In an embodiment, the first bit block includes a transport block (TB).

In an embodiment, the first bit block includes at least one TB.

In an embodiment, the first bit block includes at least one code block group (CBG).

In an embodiment, the M sub-signals correspond to a same HTTP process number.

In an embodiment, a same MCS is used for the M sub-signals.

In an embodiment, there are two sub-signals corresponding to different RVs in the M sub-signals.

In an embodiment, the M sub-signals correspond to a same RV.

In an embodiment, the M sub-signals correspond to a same NDI.

In an embodiment, the M sub-signals respectively include a baseband signal.

In an embodiment, the M sub-signals respectively include a radio signal.

In an embodiment, the M sub-signals respectively include a radio frequency signal.

In an embodiment, the M sub-signals are based on PUSCH repetition Type A.

In an embodiment, the M sub-signals are based on PUSCH repetition Type B.

In an embodiment, the M sub-signals are based on TB processing over multiple slots.

In an embodiment, the first time sub-window group includes M time sub-windows, where M is a positive integer greater than 1. The target symbol group is used for determining the M time sub-windows.

In an embodiment, the M time sub-windows are mutually orthogonal, a given time sub-window is any time sub-window in the M time sub-windows, and the given time sub-window is formed by consecutive symbols that are in the first time pool and that do not belong to the target symbol group.

In an embodiment, the M time sub-windows are mutually orthogonal, a given time sub-window is any time sub-window in the M time sub-windows, and the given time sub-window is formed by consecutive symbols that are in a slot and in a time window in the first time pool and that do not belong to the target symbol group.

In an embodiment, the M time sub-windows include some or all potentially valid symbols in the first time pool.

In an embodiment, any time sub-window in the M time sub-windows does not include an invalid symbol.

In an embodiment, any time sub-window in the M time sub-windows is formed by potentially valid symbols.

In an embodiment, the M time sub-windows are mutually orthogonal, a given time sub-window is any time sub-window in the M time sub-windows, and the given time sub-window is formed by consecutive potentially valid symbols in a slot and in a time window in the first time pool.

In an embodiment, the M time sub-windows are mutually orthogonal, a given time sub-window is any time sub-window in the M time sub-windows, and the given time sub-window is formed by consecutive potentially valid symbols in a slot in the first time pool.

In an embodiment, the M time sub-windows are mutually orthogonal, the M time sub-windows are respectively formed by M groups of consecutive potentially valid symbols in all potentially valid symbols in the first time pool, and any time sub-window in the M time sub-windows belongs to a slot.

In an embodiment, after the invalid symbols in the first time pool are determined, remaining symbols in each time window in the N time windows are all potentially valid symbols. The M time sub-windows are respectively formed by M groups of consecutive potentially valid symbols in all potentially valid symbols in the first time pool, and any time sub-window in the M time sub-windows belongs to a slot.

In an embodiment, a potentially valid symbol is a symbol that is not an invalid symbol.

In an embodiment, a potentially valid symbol is a remaining symbol other than the invalid symbols in the first time pool.

In an embodiment, the invalid symbol is a symbol invalid for transmission of the first signal.

In an embodiment, the potentially valid symbol is a symbol that is potentially valid for transmission of the first signal.

In an embodiment, the invalid symbol is a symbol invalid for transmission of the PUSCH scheduled by the first signaling.

In an embodiment, the potentially valid symbol is a symbol that is potentially valid for transmission of the PUSCH scheduled by the first signaling.

In an embodiment, the invalid symbol is a symbol invalid for transmission of a PUSCH repetition Type B.

In an embodiment, the potentially valid symbol is a symbol that are potentially valid for transmission of a PUSCH repetition Type B.

In an embodiment, for a specific definition of the invalid symbol, reference is made to to Section 6.1 of 3GPP TS38.214.

In an embodiment, for a specific definition of the potentially valid symbol, reference is made to to Section 6.1 of 3GPP TS38.214.

### Embodiment 9

Embodiment 9 illustrates a first time sub-window group according to another embodiment of this application, as shown in FIG. 9.

In Embodiment 9, the first signal is transmitted on a PUSCH, where a type of a PUSCH scheduled by the first signaling is used for determining whether the first time sub-window group meets one of a first condition and a second condition, or meets one of the first condition, the second condition, and a third condition; and the first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

In an embodiment, when a type of the PUSCH scheduled by the first signaling is a PUSCH type A, the first time sub-window group meets one of a first condition and a second condition. When the type of the PUSCH scheduled by the first signaling is a PUSCH type B, the first time sub-window group meets one of the first condition, the second condition, and a third condition. The first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

In an embodiment, the first time sub-window group meets one of a first condition and a second condition when the type of the PUSCH scheduled by the first signaling belongs to a third PUSCH type set. The first time sub-window group meets one of the first condition, the second condition, and a third condition when the type of the PUSCH scheduled by the first signaling belongs to a fourth PUSCH type set. The first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set. The third PUSCH type set includes at least one PUSCH type, the fourth PUSCH type set includes at least one PUSCH type, and the third PUSCH type set and the fourth PUSCH type set are different.

In a sub-embodiment of the foregoing embodiment, the third PUSCH type set includes a PUSCH type A. The fourth PUSCH type set includes at least one of a PUSCH type B or TB processing over multiple slots.

In a sub-embodiment of the foregoing embodiment, the third PUSCH type set includes a PUSCH type A. The fourth PUSCH type set includes a PUSCH type B.

### Embodiment 10

Embodiment 10 illustrates relationships between N time windows and a first time sub-window group according to an embodiment of this application, as shown in FIG. 10.

In Embodiment 10, the first time pool includes N time windows, where N is a positive integer greater than 1; and any time sub-window in the first time sub-window group belongs to one of the N time windows.

In an embodiment, any time window in the N time windows is reserved for a nominal repetition of transmission of the first bit block, and any time sub-window in the first time sub-window group is used for an actual repetition of the first bit block.

In an embodiment, for a specific definition of the nominal repetition, reference is made to Section 6.1 of 3GPP TS38.214.

In an embodiment, a first symbol and a second symbol belong to a same time window in the N time windows. The first symbol belongs to the reference time domain resource set, the second symbol is a symbol outside the reference time domain resource set, and the first symbol and the second symbol respectively belong to different time sub-windows in the same time window to which the first symbol and the second symbol belong.

In an embodiment, any time window in the N time windows includes at least one symbol.

In an embodiment, any time window in the N time windows includes one symbol or a plurality of consecutive symbols.

In an embodiment, any time window in the N time windows is formed by one symbol or a plurality of consecutive symbols.

In an embodiment, any two time windows in the N time windows are orthogonal to each other in time domain.

In an embodiment, the N time windows are respectively assigned to N repetitions of the first bit block.

In an embodiment, the N time windows are respectively assigned to N nominal repetitions of the first bit block.

In an embodiment, after the invalid symbols are determined, remaining symbols in each nominal repetition are potentially valid symbols. For any nominal repetition, if a quantity of potentially valid symbols in the nominal repetition is greater than 0, the nominal repetition includes one or more actual repetitions. Any actual repetition in the one or more actual repetitions is formed by a group of consecutive potentially valid symbols in all potentially valid symbols in one slot.

### Embodiment 11

Embodiment 11 is a schematic diagram of a reference time domain resource set according to an embodiment of this application, as shown in FIG. 11.

In Embodiment 11, at least one symbol in the reference time domain resource set is configured by a higher layer parameter as a DL symbol.

In an embodiment, each symbol in the reference time domain resource set is configured by a higher layer parameter as a DL symbol.

In an embodiment, some symbols in the reference time domain resource set are configured by a higher layer parameter as DL symbols.

In an embodiment, a symbol in the reference time domain resource set is configured by a higher layer parameter as a DL symbol or a Flexible symbol.

In an embodiment, at least one symbol in the reference time domain resource set is configured by a higher layer parameter tdd-UL-DL-ConfigurationCommon or tdd-UL-DL-ConfigurationDedicated as a DL symbol.

In an embodiment, each symbol in the reference time domain resource set is configured by a higher layer parameter tdd-UL-DL-ConfigurationCommon or tdd-UL-DL-ConfigurationDedicated as a DL symbol.

In an embodiment, some symbols in the reference time domain resource set are configured by a higher layer parameter tdd-UL-DL-ConfigurationCommon or tdd-UL-DL-ConfigurationDedicated as DL symbols.

In an embodiment, the symbols in the reference time domain resource set are configured by a higher layer parameter tdd-UL-DL-ConfigurationCommon or tdd-UL-DL-ConfigurationDedicated as DL symbols or Flexible symbols.

At least one symbol in the reference time domain resource set is configured by a higher layer parameter tdd-UL-DL-ConfigurationCommon as a DL symbol.

In an embodiment, each symbol in the reference time domain resource set is configured by a higher layer parameter tdd-UL-DL-ConfigurationCommon as a DL symbol.

In an embodiment, some symbols in the reference time domain resource set are configured by a higher layer parameter tdd-UL-DL-ConfigurationCommon as DL symbols.

In an embodiment, a symbol in the reference time domain resource set is configured by a higher layer parameter tdd-UL-DL-ConfigurationCommon as a DL symbol or a Flexible symbol.

### Embodiment 12

Embodiment 12 is a schematic diagram of a reference time domain resource set according to another embodiment of this application, as shown in FIG. 12.

In Embodiment 12, a symbol in the reference time domain resource set is used for both uplink transmission and downlink transmission.

In an embodiment, a sender of the first signaling simultaneously performs reception and transmission in the reference time domain resource set.

In an embodiment, a sender of the first signaling simultaneously receives and sends a radio signal in the reference time domain resource set.

In an embodiment, the sender of the first signaling simultaneously receives and sends a radio signal in at least one symbol in the reference time domain resource set.

In an embodiment, the sender of the first signaling simultaneously receives and sends a radio signal in any symbol in the reference time domain resource set.

In an embodiment, the sender of the first signaling simultaneously receives and sends, in a serving cell in which the first signal is located, a radio signal in the reference time domain resource set.

In an embodiment, the sender of the first signaling simultaneously receives and sends, in a serving cell in which the first signal is located, a radio signal in any symbol in the reference time domain resource set.

In an embodiment, the sender of the first signaling simultaneously receives and sends, in a serving cell in which the first signal is located, a radio signal in at least one symbol in the reference time domain resource set.

In an embodiment, the sender of the first signaling simultaneously receives and sends, in a serving cell group in which the first signal is located, a radio signal in the reference time domain resource set.

In an embodiment, the sender of the first signaling simultaneously receives and sends, in a serving cell in which the first signaling is located, a radio signal in the reference time domain resource set.

In an embodiment, the sender of the first signaling simultaneously receives and sends, in a BWP in which the first signaling is located, a radio signal in the reference time domain resource set.

In an embodiment, the sender of the first signaling simultaneously receives and sends, in a BWP in which the first signal is located, a radio signal in the reference time domain resource set.

In an embodiment, a sender of the first signaling supports simultaneously performing reception and transmission in the reference time domain resource set.

In an embodiment, a sender of the first signaling supports simultaneously receiving and sending a radio signal in the reference time domain resource set.

In an embodiment, the sender of the first signaling supports simultaneously receiving and sending a radio signal in at least one symbol in the reference time domain resource set.

In an embodiment, the sender of the first signaling supports simultaneously receiving and sending a radio signal in any symbol in the reference time domain resource set.

In an embodiment, the sender of the first signaling supports simultaneously receiving and sending, in a serving cell in which the first signal is located, a radio signal in the reference time domain resource set.

In an embodiment, the sender of the first signaling supports simultaneously receiving and sending, in a serving cell in which the first signal is located, a radio signal in any symbol in the reference time domain resource set.

In an embodiment, the sender of the first signaling supports simultaneously receiving and sending, in a serving cell in which the first signal is located, a radio signal in at least one symbol in the reference time domain resource set.

In an embodiment, the sender of the first signaling supports simultaneously receiving and sending, in a serving cell in which the first signaling is located, a radio signal in the reference time domain resource set.

In an embodiment, the sender of the first signaling supports simultaneously receiving and sending, in a BWP in which the first signaling is located, a radio signal in the reference time domain resource set.

In an embodiment, the sender of the first signaling supports simultaneously receiving and sending, in a BWP in which the first signal is located, a radio signal in the reference time domain resource set.

In an embodiment, the reference time domain resource set includes a symbol used for both uplink transmission and downlink transmission.

In an embodiment, any symbol in the reference time domain resource set can be used for both uplink transmission and downlink transmission.

In an embodiment, any symbol in the reference time domain resource set is used for both uplink transmission and downlink transmission.

In an embodiment, at least one symbol in the reference time domain resource set is used for both uplink transmission and downlink transmission.

In an embodiment, any symbol in the reference time domain resource set is used for both uplink transmission and downlink transmission in a serving cell in which the first signal is located.

In an embodiment, at least one symbol in the reference time domain resource set is used for both uplink transmission and downlink transmission in a serving cell in which the first signal is located.

In an embodiment, at least one symbol in the reference time domain resource set is used for both uplink transmission and downlink transmission in a serving cell group in which the first signal is located.

In an embodiment, at least one symbol in the reference time domain resource set is used for both uplink transmission and downlink transmission in a BWP to which the first signal belongs.

In an embodiment, at least one symbol in the reference time domain resource set is used for both uplink transmission and downlink transmission in a BWP to which the first signaling belongs.

In an embodiment, the reference time domain resource set does not include a symbol used for transmission of a first-type downlink signal. The first-type downlink signal includes one or more of a synchronization signal (SS)/physical broadcast channel (PBCH) block, a CORESET with an index of 0, or a system information block (SIM).

In an embodiment, the reference time domain resource set does not include a symbol used for transmission of a first-type downlink signal. The first-type downlink signal includes one or more of an SS/PBCH block of a serving cell in which the first signal is located, a CORESET with an index of 0, or a SIB.

### Embodiment 13

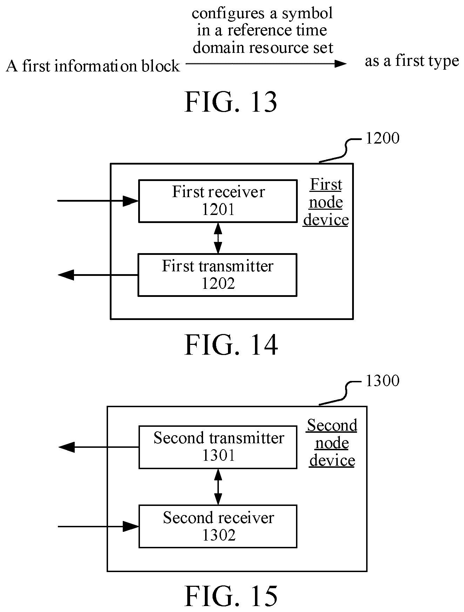

Embodiment 13 is a schematic diagram of a reference time domain resource set according to another embodiment of this application, as shown in FIG. 13.

In Embodiment 13, the first information block configures a symbol in the reference time domain resource set as a first type.

In an embodiment, the first type is different from uplink and downlink.

In an embodiment, the first type is different from uplink, downlink, and flexible.

In an embodiment, the first information block configures, in a serving cell in which the first signal is located, a symbol in the reference time domain resource set as the first type.

In an embodiment, the first information block configures, in a serving cell group in which the first signal is located, a symbol in the reference time domain resource set as the first type.

In an embodiment, the first information block configures, in the BWP in which the first signal is located, a symbol in the reference time domain resource set as the first type.

In an embodiment, the first information block configures, in the BWP in which the first signaling is located, a symbol in the reference time domain resource set as the first type.

In an embodiment, the meaning of the sentence of configuring the symbol in the reference time domain resource set as the first type includes configuring each symbol in the reference time domain resource set as the first type.

In an embodiment, the meaning of the sentence of configuring the symbol in the reference time domain resource set as the first type includes configuring at least one symbol in the reference time domain resource set as the first type.

In an embodiment, the meaning of the sentence of configuring the symbol in the reference time domain resource set as the first type includes configuring a type of a symbol in the reference time domain resource set as the first type.

In an embodiment, the meaning of the sentence of configuring the symbol in the reference time domain resource set as the first type includes configuring a type of each symbol in the reference time domain resource set as the first type.

In an embodiment, the meaning of the sentence of configuring the symbol in the reference time domain resource set as the first type includes configuring a type of at least one symbol in the reference time domain resource set as the first type.

In an embodiment, the meaning of the sentence that the first information block is used for determining the reference time domain resource set includes: the first information block configures a symbol in the reference time domain resource set as the first type.

In an embodiment, the meaning of the sentence that the first information block is used for determining the reference time domain resource set includes: the first information block configures each symbol in the reference time domain resource set as the first type.

In an embodiment, the meaning of the sentence that the first information block is used for determining the reference time domain resource set includes: the first information block configures at least one symbol in the reference time domain resource set as the first type.

In an embodiment, the meaning of the sentence that the first information block is used for determining the reference time domain resource set includes: the first information block indicates a type of each symbol in the reference time domain resource set.

In an embodiment, the meaning of the sentence that the first information block is used for determining the reference time domain resource set includes: the first information block indicates that a type of each symbol in the reference time domain resource set is the first type.

In an embodiment, the meaning of the sentence that the first information block is used for determining the reference time domain resource set includes: the first information block indicates that a type of at least one symbol in the reference time domain resource set is the first type.

In an embodiment, when one symbol is configured as the first type, the sender of the first signaling simultaneously receives and sends a radio signal on the one symbol.

In an embodiment, when one symbol is configured as the first type, the sender of the first signaling supports simultaneously receiving and sending a radio signal on the one symbol.

In an embodiment, when one symbol is configured as a type other than the first type, the sender of the first signaling only receives a radio signal or only sends a radio signal on the one symbol.

In an embodiment, when one symbol is configured as a type other than the first type, the sender of the first signaling does not support simultaneously receiving and sending a radio signal on the one symbol.

In an embodiment, the first information block is used for determining a first time domain resource set, where the first time domain resource set includes at least one symbol. The first time domain resource set is orthogonal to the reference time domain resource set.

In an embodiment, the reference time domain resource set includes a symbol that does not belong to the first time domain resource set.

In an embodiment, the reference time domain resource set is formed by symbols that do not belong to the first time domain resource set.

In an embodiment, the first information block indicates the first time domain resource set.

In an embodiment, the meaning of the sentence that the first information block is used for determining the reference time domain resource set includes: the first information block implicitly indicates the reference time domain resource set by indicating the first time domain resource set.

In an embodiment, the first time domain resource set includes one symbol or a plurality of consecutive symbols.

In an embodiment, the first time domain resource set includes one symbol or a plurality of nonconsecutive symbols.

In an embodiment, the first time domain resource set includes at least one slot.

In an embodiment, the first time domain resource set includes at least one subframe.

In an embodiment, the sender of the first signaling only receives a radio signal or only sends a radio signal in the first time domain resource set.

In an embodiment, the sender of the first signaling only receives a radio signal or only sends a radio signal in any symbol in the first time domain resource set.

In a sub-embodiment of the foregoing embodiment, the first time domain resource set includes two symbols, and the sender of the first signaling only receives a radio signal in one of the two symbols, and only sends a radio signal in the other of the two symbols.

In an embodiment, the sender of the first signaling only receives a radio signal in any symbol in the first time domain resource set.

In an embodiment, the sender of the first signaling only sends a radio signal in any symbol in the first time domain resource set.

In an embodiment, the sender of the first signaling only receives a radio signal or only sends a radio signal in at least one symbol in the first time domain resource set.

In an embodiment, the sender of the first signaling only receives a radio signal or only sends, in a cell in which the first signal is located, a radio signal in any symbol in the first time domain resource set.

In an embodiment, the first time domain resource set includes a symbol used only for uplink transmission.

In an embodiment, the first time domain resource set includes a symbol used only for downlink transmission.

In an embodiment, the first time domain resource set includes a symbol used only for uplink transmission and a symbol used only for downlink transmission.

In an embodiment, any symbol in the first time domain resource set is used only for uplink transmission or only for downlink transmission.

In a sub-embodiment of the foregoing embodiment, the first time domain resource set includes two symbols, one of the two symbols is used only for uplink transmission, and the other of the two symbols is used only for downlink transmission.

In an embodiment, any symbol in the first time domain resource set is used only for uplink transmission.

In an embodiment, any symbol in the first time domain resource set is used only for downlink transmission.

In an embodiment, any symbol in the first time domain resource set is used, in a cell in which the first signal is located, only for uplink transmission or only for downlink transmission.

In an embodiment, the first information block configures a symbol in the first time domain resource set as a second type.

In an embodiment, the first information block configures each symbol in the first time domain resource set as a second type.

In an embodiment, the first information block configures at least one symbol in the first time domain resource set as a second type.

In an embodiment, the first information block configures a type of each symbol in the first time domain resource set as a second type.

In an embodiment, if one symbol is configured as the second type, the sender of the first signaling only receives a radio signal or only sends a radio signal on the one symbol.

In an embodiment, if one symbol is configured as the second type, the sender of the first signaling only receives a radio signal on the one symbol.

In an embodiment, if one symbol is configured as the second type, the sender of the first signaling only sends a radio signal on the one symbol.

In an embodiment, if one symbol is not configured as the second type, the sender of the first signaling simultaneously receives and sends a radio signal on the one symbol.

In an embodiment, the second type is different from the first type.

In an embodiment, the second type is one of uplink or downlink.

In an embodiment, the second type includes uplink and downlink.

In an embodiment, the second type is one of uplink, downlink, or flexible.

In an embodiment, the second type is different from uplink, downlink, and flexible.

In an embodiment, the first information block configures a symbol in the first time domain resource set as a third type or a fourth type.

In an embodiment, the first information block configures any symbol in the first time domain resource set as a third type or a fourth type.

In a sub-embodiment of the foregoing embodiment, the first time domain resource set includes two symbols, and the first information block configures one of the two symbols as the third type, and configures the other of the two symbols as the fourth type.

In an embodiment, if one symbol is configured as the third type, the sender of the first signaling only receives a radio signal on the one symbol.

In an embodiment, if one symbol is configured as the fourth type, the sender of the first signaling only sends a radio signal on the one symbol.

In an embodiment, if one symbol is not configured as the third type or the fourth type, the sender of the first signaling simultaneously receives and sends a radio signal on the one symbol.

In an embodiment, if one symbol is not configured as one of the third type, the fourth type, and flexible, the sender of the first signaling simultaneously receives and sends a radio signal on the one symbol.

In an embodiment, the third type is downlink, and the fourth type is uplink.

In an embodiment, the third type is different from uplink, downlink, and flexible. The fourth type is different from uplink, downlink, and flexible.

In an embodiment, a reference time domain resource set pool includes a plurality of symbols. The first information block indicates the reference time domain resource set in the reference time domain resource set pool.

In a sub-embodiment of the foregoing embodiment, the first information block indicates that in the reference time domain resource set pool, only a symbol that is in the reference time domain resource set is configured as the first type.

In a sub-embodiment of the foregoing embodiment, the first time domain resource set is formed by all symbols outside the reference time domain resource set in the reference time domain resource set pool.

In an embodiment, a reference time domain resource set pool includes a plurality of symbols. The first information block indicates the first time domain resource set in the reference time domain resource set pool.

In a sub-embodiment of the foregoing embodiment, the first information block indicates that in the reference time domain resource set pool, only a symbol that is in the first time domain resource set is configured as the second type.

In a sub-embodiment of the foregoing embodiment, the first information block indicates that in the reference time domain resource set pool, only a symbol that is in the first time domain resource set is configured as the third type or the fourth type.

In a sub-embodiment of the foregoing embodiment, the reference time domain resource set is formed by all symbols outside the first time domain resource set in the reference time domain resource set pool.

### Embodiment 14

Embodiment 14 illustrates a structural block diagram of a processing apparatus used in a first node device according to an embodiment of this application, as shown in FIG. 14. In FIG. 14, a processing apparatus 1200 in a first node device includes a first receiver 1201 and a first transmitter 1202.

In an embodiment, the first node device is a user equipment.

In an embodiment, the first node device is a relay node device.

In an embodiment, the first receiver 1201 includes at least one of {the antenna 452, the receiver 454, the receiving processor 456, the multi-antenna receiving processor 458, the controller/processor 459, the memory 460, and the data source 467} in Embodiment 4.

In an embodiment, the first transmitter 1202 includes at least one of {the antenna 452, the transmitter 454, the transmitting processor 468, the multi-antenna transmitting processor 457, the controller/processor 459, the memory 460, and the data source 467} in Embodiment 4.

The first receiver 1201 is configured to receive a first information block, and receive first signaling.

The first transmitter first transmitter 1202 is configured to send a first signal in only a first time sub-window group in a first time pool.

In Embodiment 14, the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the reference symbol group includes the first symbol group and the second symbol group when the first time pool and the reference time domain resource set overlap and the first time pool includes a time domain resource that does not belong to the reference time domain resource set.

In an embodiment, the reference symbol group is used for determining a target symbol group in the first time pool, and the first time sub-window group includes some or all symbols outside the target symbol group in the first time pool.

In an embodiment, the first time sub-window group includes M time sub-windows, where M is a positive integer greater than 1. The first signal includes M sub-signals, the M time sub-windows respectively include time domain resources occupied by the M sub-signals, and the M sub-signals respectively include M actual repetitions of a first bit block.

In an embodiment, the first time pool includes N time windows, where N is a positive integer greater than 1. Any time sub-window in the first time sub-window group belongs to one of the N time windows.

In an embodiment, at least one symbol in the reference time domain resource set is configured by a higher layer parameter as a DL symbol.

In an embodiment, the first signal is transmitted on a PUSCH, where a type of a PUSCH scheduled by the first signaling is used for determining whether the first time sub-window group meets one of a first condition and a second condition, or meets one of the first condition, the second condition, and a third condition; and the first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

In an embodiment, the first receiver 1201 is included, and configured to receive a second information block, where
the second information block is used to indicate the first symbol group.

In an embodiment, the first receiver 1201 is included, and configured to receive a third information block, where
the third information block is used to indicate the second symbol group.

### Embodiment 15

Embodiment 15 illustrates a structural block diagram of a processing apparatus used in a second node device according to an embodiment of this application, as shown in FIG. 15. In FIG. 15, a processing apparatus 1300 in a second node device includes a second transmitter 1301 and a second receiver 1302.

In an embodiment, the second node device is a base station.

In an embodiment, the second node device is a user equipment.

In an embodiment, the second node device is a relay node device.

In an embodiment, the second transmitter 1301 includes at least one of {the antenna 420, the transmitter 418, the transmitting processor 416, the multi-antenna transmitting processor 471, the controller/processor 475, and the memory 476} in Embodiment 4.

In an embodiment, the second receiver 1302 includes at least one of {the antenna 420, the receiver 418, the receiving processor 470, the multi-antenna receiving processor 472, the controller/processor 475, and the memory 476} in Embodiment 4.

The second transmitter 1301 is configured to send a first information block, and send first signaling.

The second receiver 1302 is configured to receive a first signal in only a first time sub-window group in a first time pool, where
the first information block is used for determining a reference time domain resource set; the first signaling indicates scheduling information of the first signal, the first signaling is used for determining the first time pool, and the first time pool includes more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

In an embodiment, the reference symbol group includes the first symbol group and the second symbol group when the first time pool and the reference time domain resource set overlap and the first time pool includes a time domain resource that does not belong to the reference time domain resource set.

In an embodiment, the reference symbol group is used for determining a target symbol group in the first time pool, and the first time sub-window group includes some or all symbols outside the target symbol group in the first time pool.

In an embodiment, the first time sub-window group includes M time sub-windows, where M is a positive integer greater than 1. The first signal includes M sub-signals, the M time sub-windows respectively include time domain resources occupied by the M sub-signals, and the M sub-signals respectively include M actual repetitions of a first bit block.

In an embodiment, the first time pool includes N time windows, where N is a positive integer greater than 1. Any time sub-window in the first time sub-window group belongs to one of the N time windows.

In an embodiment, at least one symbol in the reference time domain resource set is configured by a higher layer parameter as a DL symbol.

In an embodiment, the first signal is transmitted on a PUSCH, where a type of a PUSCH scheduled by the first signaling is used for determining whether the first time sub-window group meets one of a first condition and a second condition, or meets one of the first condition, the second condition, and a third condition; and the first condition includes that the first time sub-window group belongs to the reference time domain resource set, the second condition includes that the first time sub-window group is orthogonal to the reference time domain resource set, and the third condition includes that the first time sub-window group and the reference time domain resource set partially overlap and the first time pool includes a time domain resource that does not belong to the reference time domain resource set.

In an embodiment, the second transmitter 1301 is included, and configured to send a second information block, where
the second information block is used to indicate the first symbol group.

In an embodiment, the second transmitter 1301 is included, and configured to send a third information block, where
the third information block is used to indicate the second symbol group.

A person of ordinary skill in the art may understand that all or some of the steps of the foregoing method may be implemented by a program instructing relevant hardware. The program may be stored in a computer-readable storage medium, such as a read-only memory, a hard disk, or an optical disc. Optionally, all or some of the steps of the foregoing embodiments may alternatively be implemented by using one or more integrated circuits. Correspondingly, the module units in the foregoing embodiments may be implemented in a form of hardware or may be implemented in a form of a software functional module. This application is not limited to a combination of software and hardware in any particular form. The terminal and the UE in this application include, but are not limited to, wireless communication devices such as unmanned aerial vehicles, communication modules on unmanned aerial vehicles, telecontrolled aircrafts, aircrafts, diminutive aeroplanes, mobile phones, tablet computers, notebook computers, vehicle-mounted communication devices, wireless sensors, network cards, Internet of things terminals, radio frequency identification (RFID) terminals, narrow band Internet of things (NB-IOT) terminals, Machine Type Communication (MTC) terminals, enhanced MTC (eMTC) terminals, data cards, low-cost mobile phones, and low-cost tablet computers. The base station or system device in this application includes, but is not limited to, a wireless communication device such as a macrocellular base station, a microcellular base station, a home base station, a relay base station, an NR NodeB (gNB), and a transmitter receiver point (TRP).

The foregoing descriptions are merely preferred embodiments of this application and are not intended to limit the protection scope of this application. Any change and modification made based on the embodiments described in this specification should be considered as apparent and fall within the protection scope of the present invention if some or all similar technical effects can be obtained.

## Claims

1. A first node device for wireless communication, comprising:
a first receiver, configured to receive a first information block, and receive first signaling; and
a first transmitter, configured to send a first signal in only a first time sub-window group in a first time pool, wherein
the first information block is used for determining a reference time domain resource set; the first signaling indicates scheduling information of the first signal, the first signaling is used for determining the first time pool, and the first time pool comprises more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

2. The first node device according to claim 1, wherein the reference symbol group comprises the first symbol group and the second symbol group when the first time pool and the reference time domain resource set overlap and the first time pool comprises a time domain resource that does not belong to the reference time domain resource set.

3. The first node device according to claim 1 or 2, wherein the reference symbol group is used for determining a target symbol group in the first time pool, and the first time sub-window group comprises some or all symbols outside the target symbol group in the first time pool.

4. The first node device according to any one of claims 1 to 3, wherein the first time sub-window group comprises M time sub-windows, wherein M is a positive integer greater than 1; and the first signal comprises M sub-signals, the M time sub-windows respectively comprise time domain resources occupied by the M sub-signals, and the M sub-signals respectively comprise M actual repetitions of a first bit block.

5. The first node device according to any one of claims 1 to 4, wherein the first time pool comprises N time windows, wherein N is a positive integer greater than 1; and any time sub-window in the first time sub-window group belongs to one of the N time windows.

6. The first node device according to any one of claims 1 to 5, wherein at least one symbol in the reference time domain resource set is configured by a higher layer parameter as a DL symbol.

7. The first node device according to any one of claims 1 to 6, wherein the first signal is transmitted on a PUSCH, wherein a type of a PUSCH scheduled by the first signaling is used for determining whether the first time sub-window group meets one of a first condition and a second condition, or meets one of the first condition, the second condition, and a third condition; and the first condition comprises that the first time sub-window group belongs to the reference time domain resource set, the second condition comprises that the first time sub-window group is orthogonal to the reference time domain resource set, and the third condition comprises that the first time sub-window group and the reference time domain resource set partially overlap and the first time pool comprises a time domain resource that does not belong to the reference time domain resource set.

8. A second node device for wireless communication, comprising:
a second transmitter, configured to send a first information block, and send first signaling; and
a second receiver, configured to receive a first signal in only a first time sub-window group in a first time pool, wherein
the first information block is used for determining a reference time domain resource set; the first signaling indicates scheduling information of the first signal, the first signaling is used for determining the first time pool, and the first time pool comprises more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

9. A method in a first node for wireless communication, comprising:
receiving a first information block, and receiving first signaling; and
sending a first signal in only a first time sub-window group in a first time pool, wherein
the first information block is used for determining a reference time domain resource set; the first signaling indicates scheduling information of the first signal, the first signaling is used for determining the first time pool, and the first time pool comprises more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.

10. A method in a second node for wireless communication, comprising:
sending a first information block, and sending first signaling; and
receiving a first signal in only a first time sub-window group in a first time pool, wherein
the first information block is used for determining a reference time domain resource set; the first signaling indicates scheduling information of the first signal, the first signaling is used for determining the first time pool, and the first time pool comprises more than one symbol; a reference symbol group is used for determining the first time sub-window group, and the reference symbol group depends on whether the first time pool and the reference time domain resource set overlap; the reference symbol group is a first symbol group when the first time pool and the reference time domain resource set are orthogonal; and the reference symbol group is a second symbol group when the first time pool belongs to the reference time domain resource set.
